**Europäisches Patentamt**

**European Patent Office**

**Office européen des brevets**

(19)

(11) Veröffentlichungsnummer : **0 408 705 B1**

# (12) EUROPÄISCHE PATENTSCHRIFT

(45) Veröffentlichungstag der Patentschrift :
30.09.92 Patentblatt 92/40

(51) Int. Cl.⁵ : **B60S 1/38**

(21) Anmeldenummer : **90901799.8**

(22) Anmeldetag : **27.01.90**

(86) Internationale Anmeldenummer :
**PCT/EP90/00153**

(87) Internationale Veröffentlichungsnummer :
**WO 90/08679 09.08.90 Gazette 90/19**

(54) **WISCHBLATT.**

(30) Priorität : **03.02.89 DE 3903219**

(43) Veröffentlichungstag der Anmeldung :
**23.01.91 Patentblatt 91/04**

(45) Bekanntmachung des Hinweises auf die
Patenterteilung :
**30.09.92 Patentblatt 92/40**

(84) Benannte Vertragsstaaten :
**ES FR GB IT SE**

(56) Entgegenhaltungen :
**EP-A- 0 007 014**

(56) Entgegenhaltungen :
**EP-A- 0 260 809**
**FR-A- 2 215 048**
**GB-A- 1 460 202**
**US-A- 3 696 497**

(73) Patentinhaber : **SWF Auto-Electric GmbH**
**Stuttgarter Strasse 119 Postfach 1763**
**W-7120 Bietigheim-Bissingen (DE)**

(72) Erfinder : **SCHMID, Eckhardt**
**Heilbronner Strasse 62**
**W-7129 Brackenheim (DE)**
Erfinder : **SCHOLL, Wolfgang**
**Forststrasse 29**
**W-7121 Gemmrigheim (DE)**

EP 0 408 705 B1

Jouve, 18, rue Saint-Denis, 75001 PARIS

**Beschreibung**

Die Erfindung bezieht sich auf ein Wischblatt für Scheibenwischeranlagen gemäß den Merkmalen des Oberbegriffs des Anspruchs 1.

In EP,A, 0 260 809 wird ein Wischblatt vorgeschlagen,das aus einem Tragbügelsystem mit einem Hauptbügel und mehreren Krallenbügeln, einer Wischleiste aus Gummi sowie Versteifungs- oder Federschienen besteht, über die der nur punktweise über die Krallen des Tragbügelsystems auf die Wischleiste eingeleitete Anpreßdruck möglichst gleichmäßig über die Länge der Wischleiste verteilt wird. Dabei hat die Wischleiste einen Tragkörper, der beidseitig je eine erste Längsnut aufweist, in denen diese Versteifungsschienen versenkt angeordnet sind. Außerdem hat der Tragkörper der Wischleiste beidseitig je eine weitere Längsnut oder einen Längskanal, in den die Endbereiche der Krallen der Krallenbügel eingreifen. Wischblätter mit diesem Aufbau eignen sich insbesondere auch zur Reinigung gekrümmter Windschutzscheiben an Kraftfahrzeugen, weil aufgrund des Bügelsystems und der verschiebbaren Führung der Krallen in dem Längskanal eine Anpassung der Kontur der Wischlippe an die zu reinigende Scheibe möglich ist. Diese Krallen können sich nämlich in dem Längskanal verschieben und es ist auch darauf geachtet, daß eine Relativbewegung zwischen der Versteifungsschiene und der Wischleiste möglich ist.

Weiter sind aus EP,A, 0007017 wischblätter bekannt, bei denen die Längsnut für die Federschiene nur einseitig in die Stirnseite der Wischleiste ausläuft, während auf der anderen Seite diese Längsnut durch einen Quersteg abgeschlossen ist. Im abstand von diesem Quersteg ist in der Längsnut ein Sicherungsnocken vorgesehen, der mit einer Aussparung in der Verteifungsschiene zusammenwirkt und als Sicherungsmittel gegen eine Längsverschiebung dieser Versteifungsschiene relativ zur Wischleiste dient. Bei dieser Ausführung ist also die Versteifungsschiene nahe ihrem einen Ende formschlüssig mit der Wischleiste verbunden. Wird ein solches Wischblatt über eine gekrümmte Scheibe bewegt, werden die Versteifungsschienen und die Wischleiste entsprechend gekrümmt, wobei eine Relativbewegung zwischen der Versteifungsschiene und der Wischleiste stattfinden muß. Wegen der ortsfesten Einspannung der Versteifungsschiene an dem einen Ende treten diese Relativbewegungen zwangsläufig verstärkt am anderen Ende der Versteifungsschiene auf. Dies gilt auch bei dem aufgrund von Temperaturschwankungen unvermeidbaren Schrumpfen der Wischleiste. Wegen der ortsfesten Einspannung der Versteifungsschiene am einen Ende ist eine verhältnismäßig große Relativbewegung am anderen Ende erforderlich, was insbesondere bei hohen Wischgeschwindigkeiten zu Problemen führt, weil die erforderliche Verformung und Anpassung der Wischleiste an die zu reinigende Scheibe nicht schnell genug erfolgt, wodurch die Wischwirkung verschlechtert wird.

Sinngemäß gelten diese Ausführungen auch bezüglich der Fixierung der Wischleiste am Tragbügelsystem. Bei den bekannten Wischblättern wird das Tragbügelsystem am gleichen Ende der Wischleiste wie die Federschiene fixiert und die Kralle am anderen Ende des Tragbügelsystems verschiebt sich verhältnismäßig stark relativ zur Wischleiste, wenn diese über eine gekrümmte Scheibe bewegt wird.

Der vorliegenden Erfindung liegt nun die Aufgabe zugrunde, ein Wischblatt dieser Art hinsichtlich der Wischwirkung zu verbessern, ohne daß dadurch erhöhte Herstellkosten entstehen.

Diese Aufgabe wird erfindungsgemäß mit den kennzeichnenden Merkmalen des Anspruchs 1 gelöst.

Der Grundgedanke der Erfindung ist dabei darin zu sehen, daß durch eine Verlagerung der Sicherungsmittel, die an einer Stelle die Längsverschiebung der Federschiene in der Längsnut verhindern, vom Rand zur Mitte der Wischleiste hin die erforderlichen Ausgleichbewegungen zwischen der Federschiene und der Wischleiste gleichmäßig auf beide Enden verteilt werden.

Während bei der bekannten Ausführung nur ein Ende der Versteifungsschiene relativ zur Wischleiste verschoben wird, dabei allerdings einen verhältnismäßig großen Weg zurückzulegen hat, sind nun bei der erfindungsgemäßen Ausführung beide Enden der Federschiene relativ zur Wischleiste verschiebbar, wobei nur der halbe Verschiebeweg meßbar ist. Dies wird erreicht durch ortsfeste Fixierung der Federschiene im mittleren Bereich der Wischleiste.

Bei der Dimensionierung einer Wischleiste muß man darauf achten, daß auch unter ungünstigen Toleranzen und bei einer starken Schrumpfung die Versteifungsschiene nicht über die Stirnseite der Wischleiste vorsteht. Üblicherweise ist daher die Wischleiste länger als die Federschiene, wobei nun gemäß einer vorteilhaften Weiterbildung der Erfindung die unvermeidbaren Toleranzen dann gleichmäßiger verteilt werden, wenn die Federschiene derart in der Längsnut angeordnet wird, daß der die Versteifungsschiene überragende Endbereich der Wischleiste an beiden Enden wenigstens annähernd gleich lang ist. Bei einer solchen Ausführung können also Toleranzen weit besser aufgefangen werden, so daß ein Vorstehen der Versteifungsschiene auch dann nicht befürchtet werden muß, wenn sich die Längsnuten für die Versteifungsschiene durchgehend über die gesamte Länge der Wischleiste von deren einer Stirnseite bis zu deren anderer Stirnseite erstrecken.

Optimale Eigenschaften erreicht man, wenn man diese Sicherungsmittel exakt in der Wischblattmitte anordnet. Dies ist jedoch in den meisten Fällen nicht unbedingt erforderlich und es werden daher Ausführungen bevorzugt, bei denen diese Sicherungsmittel im Bereich einer solchen Kralle angeordnet sind, die der Mitte am nächsten liegt. Wenn nämlich zur Bildung dieser Sicherungsmittel die Versteifungsschiene eine Aussparung aufweist, wird bei einer solchen Anordnung die Anpreßkraftverteilung durch diese Versteifungsschiene nicht nachteilig beeinträchtigt, wenn diese Aussparung gerade im Bereich einer Kralle liegt. Vorteilhaft ist außerdem bei einer solchen Ausführung, daß die Kralle zur Bildung der Sicherungsmittel ausgenutzt werden kann.

Grundsätzlich können die Sicherungsmittel so ausgebildet sein, daß eine kraftschlüssige Verbindung zwischen der Wischleiste und der Versteifungsschiene geschaffen ist. Derartige Ausführungen sind insbesondere bei Wischblättern sinnvoll, die auf einer Kreisbahn über die zu reinigende Scheibe bewegt werden. Wird hingegen das Wischblatt während der kreisförmigen Bewegung in radialer Richtung ein- und ausgefahren, wie dies bei den sogenannten Hubwischeranlagen der Fall ist, wird man eine formschlüssige Verbindung zwischen der Wischleiste und der Versteifungsschiene vorsehen.

Diese formschlüssige Verbindung kann in bekannter Weise dadurch geschaffen werden, daß man an der Wischleiste einen Sicherungsnocken vorsieht, der in eine Aussparung in der Versteifungsschiene eingreift. Dabei kann dieser Sicherungsnocken bereits bei der Formgebung der Wischleiste geschaffen werden. Es sind aber auch Ausführungen denkbar, bei denen dieser Sicherungsnocken erst durch eine Verformung des Endbereichs einer Kralle gebildet wird, so daß im unmontierten Zustand die Wischleiste über ihre gesamte Länge einen gleichbleibenden Querschnitt aufweist und daher kostengünstig in einem Extrusionsverfahren hergestellt werden kann.

Dabei kann zugleich durch das Verformen der kralle, die der Mitte der Wischleiste am nächsten liegt, eine kraft- und/oder formschlüssige Verbindung zwischen dem Tragbügelsystem und der Wischleiste geschaffen werden. Besonders bevorzugt wird aber eine Ausführung, bei der durch das Verformen der Kralle das Tragbügelsystem und die Versteifungschiene stabil an der Wischleiste fixiert werden.

Die Erfindung und deren vorteilhafte Ausgestaltungen werden nachstehend anhand der in der Zeichnung dargestellten Ausführungsbeispiele näher erläutert. Es zeigen:

Fig. 1 eine Seitenansicht auf eine Wischblatthälfte,

Fig. 2 den zugeordneten Teilbereich einer Versteifungsschiene,

Fig. 3 in vergrößertem Maßstab eine Seitenansicht auf einen Teil der Wischleiste in Fig. 1,

Fig. 4 in vergrößertem Maßstab den zu Fig. 3 gehörenden Bereich der Versteifungsschiene,

Fig. 5 in vergrößertem Maßstab einen Querschnitt durch die Wischleiste entlang der Schnittlinie V-V und

Fig. 6 einen Schnitt ähnlich Fig. 5 bei einem anderen Ausführungsbeispiel.

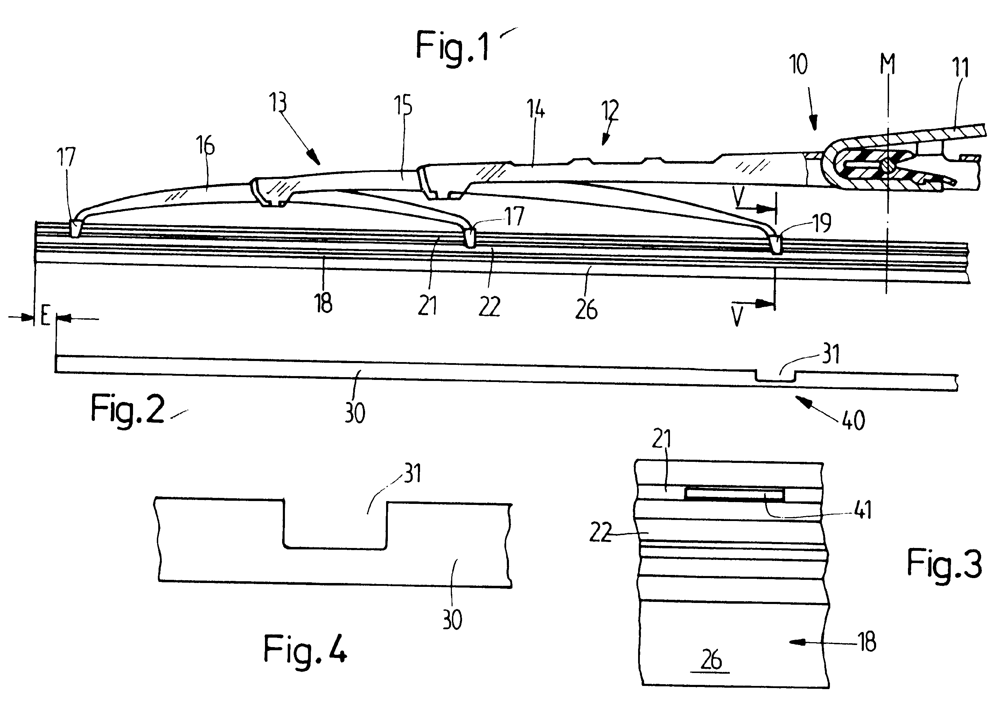

Zu einem insgesamt mit 10 bezeichneten Scheibenwischer für eine Scheibenwischeranlage an Kraftfahrzeugen gehört ein Wischarm 11, an dem schwenkbeweglich ein Wischblatt 12 aufgehängt ist, von dem in Fig. 1 nur die linke Hälfte dargestellt ist. Zu diesem Wischblatt 12 gehört ein Tragbügelsystem 13, das bei dem gezeigten Ausführungsbeispiel aus einem Hauptbügel 14, einem schwenkbar daran aufgehängten ersten Krallenbügel 15, der oft auch als Zwischenbügel bezeichnet wird, und einem daran schwenkbar aufgehängten zweiten Krallenbügel 16 besteht. Der Krallenbügel 16 hat zwei Krallen 17 zur Führung einer Gummiwischleiste, die insgesamt mit 18 bezeichnet ist. Der andere Krallenbügel 15 hat nur eine Kralle, die in Fig. 1 mit 19 bezeichnet ist. Diese Kralle 19 liegt der mit M angedeuteten Mitte des Wischblattes am nächsten.

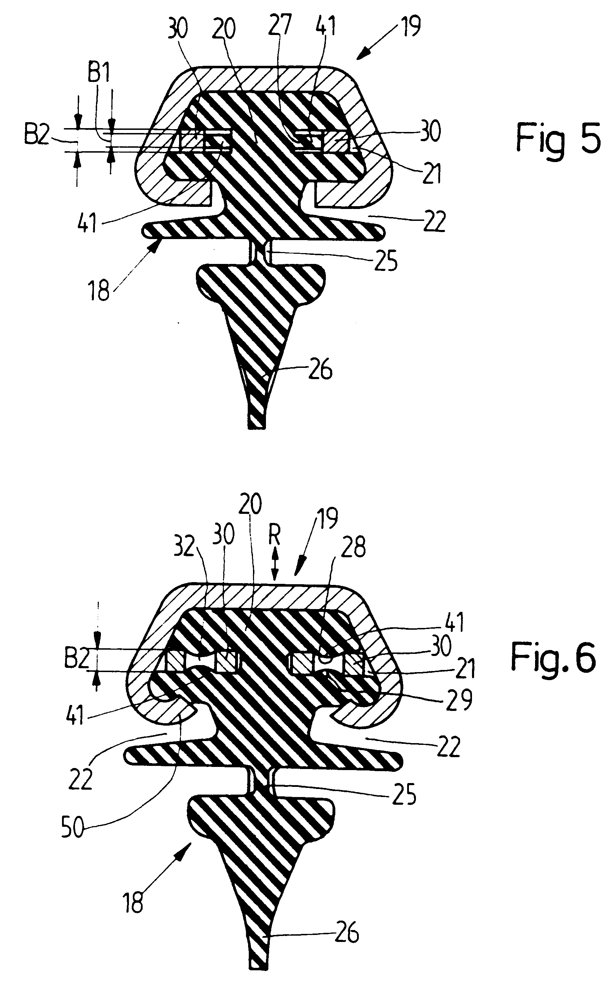

Die Gummiwischleiste 18 hat das in Fig. 5 ersichtliche, an sich bekannte Profil. In einen Tragkörper 20 mit einem im wesentlichen trapezförmigen Querschnitt sind beidseitig Längsnuten 21 eingearbeitet. Außerdem sind in diesen Tragkörper 20 beidseitig Führungsnuten 22 eingearbeitet, deren Bedeutung später noch erläutert wird. Eine Wischlippe 26 ist in bekannter Weise über einen Kippsteg 25 mit diesem Tragkörper 20 verbunden. Die beiden Längsnuten 21 dienen zur Aufnahme von jeweils einer Versteifungsschiene 30, die zur gleichmäßigen Verteilung des über die Krallen 17, 19 eingeleiteten Anpreßdruckes und zur Führung der Gummiwischleiste 18 dient.

Der bis jetzt beschriebene Aufbau des Wischblattes ist im Prinzip bekannt. Für die vorliegende Erfindung wesentlich ist nun die Ausbildung der insgesamt mit 40 bezeichneten Sicherungsmittel, durch die an einer Stelle die Versteifungsschiene 30 gegen eine Längsverschiebung in der zugeordneten Längsnut 21 gesichert ist. Bei dem Ausführungsbeispiel nach den Fig. 1 bis 5 gehört zu diesen Sicherungsmitteln 40 ein Sicherungsnocken 41, der vom Boden 27 der Längsnut 21 vorsteht. Fig. 5 zeigt, daß die Breite B1 dieses Sicherungsnockens 41 kleiner sein kann als die Breite B2 der Längsnut 21. Dies ist aber nicht unbedingt erforderlich und in den meisten Fällen wird dieser Sicherungsnocken 41 sich über die gesamte Breite B2 der Längsnut 21 erstrecken. Zu den Sicherungsmitteln 40 gehört außerdem eine randoffene Aussparung 31 in der Federschiene. Die Länge dieser Aussparung 31 entspricht der Länge des Sicherungsnockens 41, so daß durch Eingriff dieses Sicherungsnockens 41 in diese Aussparung 31 eine formschlüssige Verbindung zwischen der Gummiwischleiste 18 und dieser Versteifungsschiene 30 hergestellt wird. Dabei ist besonders wichtig, daß diese Sicherungsmittel 40 in einem mittleren Bereich, also nahe der Mitte M des Wischblattes 12 angeordnet sind. Bei dem in den Fig. 1 bis 5 dargestellten Ausführungsbeispiel wird nicht exakt die Mitte gewählt, sondern diese Sicherungsmittel 40 liegen im Bereich der Kralle 19, die der Mitte M der Wischleiste 18 am nächsten liegt. Dabei ist die Länge der Versteifungsschiene 30 kleiner als die Länge der Wischleiste 18, wobei die Versteifungsschiene 30 derart relativ zur Wischleiste 18 angeordnet ist, daß der die Versteifungsschiene 30 überragende Endbereich E der Wischleiste 18 an beiden Enden wenigstens annähernd gleich lang ist.

Die Anordnung der Sicherungsmittel 40 im Bereich der Kralle 19 hat den Vorteil, daß die durch die Aussparung 31 hervorgerufene Materialschwächung der Versteifungsschiene 30 keinen nachteiligen Einfluß auf die Anpreßdruckverteilung hat.

Das Ausführungsbeispiel gemäß Fig. 6 unterscheidet sich von der Ausführung nach Fig. 5 im wesentlichen dadurch, daß nunmehr die Versteifungsschiene 30 einen ringsum geschlossenen Durchbruch 32 aufweist und daß die darin eingreifenden Sicherungsnocken 41 durch Materialverdrängung aus den Seitenwänden 28, 29 der Längsnut 21 des Tragkörpers der Wischleiste 18 herausgeformt sind. Diese Materialverformung zur Bildung der Sicherungsnocken 41 geschieht durch eine entsprechende Verformung des in die Führungsnut 22 eintauchenden Endbereichs 50 der den Tragkörper 20 umgreifenden Kralle 19. Dieser Endbereich 50 der Kralle 19 wird bereichweise hakenförmig derart abgebogen, daß sein Ende in Richtung auf die Versteifungsschiene 30 zeigt. Dadurch wird das federelastische Material des Tragkörpers 20 gepreßt, wobei ein bestimmter Bereich in den Durchbruch bzw. die Aussparung 32 in der Versteifungsschiene 30 eintaucht. Durch diese Verformung des Tragkörpers 20 der Wischleiste in einer Richtung R senkrecht zu der zu reinigenden Scheibe wird auch auf der anderen Seite Material als Sicherungsnocken in die Aussparung 32 eingedrückt, wie dies Fig. 6 deutlich zeigt. Somit ist also auch bei dieser Ausführung gewissermaßen eine formschlüssige Verbindung zwischen der Verteifungsschiene 30 und der Wischleiste I8 geschaffen. Da bei der Ausführung nach Fig. 6 ein geschlossener Durchbruch 32 als Sicherungsmittel verwendet wird, ist die Versteifungsschiene 30 zusätzlich gegen eine Verschiebung quer zur Längsrichtung der Wischleiste 18 gesichert. Auf diese Weise kann man eine metallische Berührung zwischen dieser Versteifungsschiene 30 und der Kralle 17 vermeiden.

Aus der Ausführung gemäß Fig. 6 kann abgebleitet werden, daß man die Versteifungsschiene auch nur kraftschlüssig mit der Wischleiste verbinden kann. Wenn nämlich die Versteifungsschiene 30 keine Aussparung oder Durchbrüche 32 aufweist, wird durch das Umbiegen des Endbereichs 50 der Kralle bereichsweise die Breite B2 der Längsnut 21 derart herabgesetzt, daß diese Versteifungsschiene 30 in diesem Bereich zwischen den Seitenwänden 28, 29 durch Preßsitz, also kraftschlüssig, gehalten ist.

Das Ausführungsbeispiel nach Fig. 6, daß eine Kralle, nämlich die der Mitte des Wischblatte nächstliegende Kralle 19 zur Bildung der Sicherungsmittel ausgenutzt wird. Dies ist natürlich nicht zwingend notwendig, denn man könnte eine separate Klammer verwenden, die ähnlich dieser Kralle 19 exakt in der Mitte M der Wischleiste für eine formschlüssige oder kraftschlüssige Verbindung zwischen der Versteifungsschiene und der Wischleiste sorgt.

Fig. 6 zeigt außerdem, daß der Endbereich 50 der Kralle 19 in das gummielastische Material der Wischleiste 18 einsticht, so daß auf diese Weise zumindest eine kraftschlüssige, bei geeigneter Ausbildung des Endbereichs aber auch eine formschlüssige Verbindung zwischen dem Tragbügelsystem, also dem Zwischenbügel 15 und der Wischleiste 18 geschaffen ist. Im Gegensatz zu den bekannten Ausführungen wird also auch das Tragbügelsystem im mittleren Bereich, und nicht in einem Endbereich, mit der Gummiwischleiste 18 verriegelt. Dadurch wird die Gefahr vermindert, daß die äußerte Kralle 17 bei einem übermäßig großen Schrumpfen der Wischleiste aus der Führungsnut 22 herausgleitet.

Besonders bevorzugt wird die durch Fig. 6 dargestellte Kombination, weil die Wischleiste über die gesamte Länge einen gleichbleibenden Querschnitt aufweist. Das Verquetschen oder Vercrimpen des Tragbügelsystems mit der Wischleiste und das gleichzeitige Sichern der Versteifungsschiene gegen eine Längsverschiebung kann dabei in einem Arbeitsgang durchgeführt werden, wobei noch besonders vorteilhaft ist, daß wegen des gleichbleibenden Querschnitts die Wischleiste in einem Extrusionsverfahren kostengünstig herstellbar ist. Auch die Montage des Tragbügelsystems ist einfacher als bei vielen bekannten Ausführungen, weil das Aufschieben der Krallenbügel nicht durch vorstehende Sicherungsnocken erschwert wird. Wegen des gleichbleibenden Querschnitts der Wischgummileiste bei der Ausführung nach Fig. 6 können unterschiedliche Wischblattlängen ohne zusätzliche Werkzeuge kostengünstig hergestellt werden.

## Patentansprüche

1. Wischblatt für Scheibenwischeranlagen an Kraftfahrzeugen mit einem Tragbügelsystem (13) zur Führung einer Wischleiste (18), die eine über einen Steg (25) an einem Tragkörper (20) aufgehängte Wischlippe (26) aufweist, wobei der Tragkörper beidseitig je eine Längsnut (22) zur Aufnahme von je einer Versteifungsschiene (30) aufweist, die an einer Stelle durch Sicherungsmittel (40) gegen Längsverschiebung in der Längsnut (22) gesichert ist und deren Länge kleiner ist als die Länge der Wischleiste, dadurch gekennzeichnet, daß die Sicherungsmittel (40) ausschließlich im mittleren Bereich der Versteifungsschiene (30) bzw. der Wischleiste (18) ausgebildet sind.

2. Wischblatt nach Anspruch 1, dadurch gekennzeichnet, daß sich die Längsnuten (21) für die Versteifungsschienen (30) durchgehend über die gesamte Länge der Wischleiste (I8) von deren einer Stirnseite bis zur anderen Stirnseite erstrecken und daß der die Versteifungsschiene (30) überragende Endbereich (E) der Wischleiste (18) an beiden Enden weinigstens annähernd gleich lang ist.

3. Wischblatt nach Anspruch 1, dadurch gekennzeichnet, daß das Tragbügelsystem (I3) mehrerere Krallenbügel (15,16) aufweist, die mit ihren Krallen (I7,I9) den Tragkörper (20) der Wischleiste (I8) an mehreren über die Länge verteilten Stellen umgreifen, und daß die Sicherungsmittel (40) im Bereich einer solchen Kralle (19) angeordnet sind, die der Mitte (M) der Wischleiste am nächsten liegt.

4. Wischblatt nach Anspruch 2 oder 3, dadurch gekennzeichnet, daß durch die Sicherungsmittel eine kraftschlüssige Verbindung zwischen der Wischleiste und der Versteifungsschiene geschaffen ist.

5. Wischblatt nach Anspruch 4, dadurch gekennzeichnet, daß die Versteifungsschiene (30) einen über die gesamte Länge durchgehend gleichen Querschnitt aufweist und daß die Breite (B2) der Längsnut (22) durch eine Verformung des Tragkörpers (20) der Wischleiste (18) bereichweise derart herabgesetzt ist, daß die Versteifungsschiene (30) in diesem Bereich zwischen den Seitenwänden (28,29) der Längsnut (22) durch Preßsitz gegen Längsverschiebung gesichert ist.

6. Wischblatt nach Anspruch 5, dadurch gekennzeichnet, daß die Verformung des Tragkörpers (20) durch eine die Wischleiste (18) umgreifende Klammer erfolgt.

7. Wischblatt nach Anspruch 6, dadurch gekennzeichnet, daß als Klammer unmittelbar eine Kralle (19) eines Krallenbügels (15) dient.

8. Wischblatt nach Anspruch 1, 2 oder 3, dadurch gekennzeichnet, daß durch die Sicherungsmittel (40) eine formschlüssige Verbindung zwischen der Wischleiste (18) und der Versteifungsschiene (30) geschaffen ist.

9. Wischblatt nach Anspruch 8, dadurch gekennzeichnet, daß die Versteifungsschiene (30) im mittleren Bereich eine Aussparung (31) oder einen Durchbruch (32) aufweist, in die ein an der Wischleiste (18) ausgebildeter Sicherungsnocken (41) eingreift, wobei die Aussparung bzw. Durchbruch (31,32) und der darin eingreifende Sicherungsnocken (41) die Sicherungsmittel (40) bilden.

10. Wischblatt nach Anspruch 9, dadurch gekennzeichnet, daß die Aussparung (31) randoffen ist und daß der Sicherungsnocken (41) vom Boden (27) der Längsnut (21) vorsteht.

11. Wischblatt nach Anspruch 9, dadurch gekennzeichnet, daß von wenigstens einer Seitenwand (28,29) der Längsnut (21) ein Sicherungsnocken (41) vorsteht und in die Aussparung bzw. den Durchbruch (31,32) der Versteifungsschiene (30) eintaucht.

12. Wischblatt nach Anspruch, dadurch gekennzeichnet, daß dieser Sicherungsnocken (41) durch Verformung des Endbereichs (50) der Kralle (19) aus der Seitenwand (28,29) der Längsnut (21) herausgedrückt ist.

13. Wischblatt nach Anspruch 12, dadurch gekennzeichnet, daß durch die Verformung des Endbereichs (50) der Kralle (19) der Tragkörpers (20) der Wischleiste (18) in einer Richtung (R) senkrecht zu der zu reinigenden Scheibe verformt wird und damit von gegenüberliegenden Seiten der Seitenwände (28,29) der Längsnut (21) Material als Sicherungsnocken (41) in die Aussparung bzw. den Durchbruch (31,32) der Versteifungsschiene (30) eingedrückt wird.

14. Wischblatt nach Anspruch 11, 12, oder 13, dadurch gekennzeichnet, daß die Versteifungsschiene (30) einen ringsum geschlossenen Durchbruch (32) aufweist, in den der Sicherungsnocken (41) eingreift.

15. Wischblatt nach Anspruch 1, dadurch gekennzeichnet, daß ausschließlich durch ein Verformen der Kralle (19), die der Mitte (M) der Wischleiste (18) am nächsten liegt, eine kraft-und/oder formschlüssige Verbin-

5

dung zwischen dem Tragbügelsystem (13) und der Wischleiste (18) und/oder der Versteifungsschiene (30) geschaffen wird.

## Claims

1. A wiper blade for windshield wiper systems of motor vehicles with a carrier yoke system (13) for guiding a wiper strip (18) comprising a wiper lip (26) mounted onto a carrier body (20) via a web (25), whereby on both sides the carrier body comprises an elongated groove (22) each for receiving a reinforcing rail each, which at one point is secured against longitudinal movement in the respective elongated groove (22) by securing means (40), and the length of which reinforcing rail is smaller than the length of the wiper strip, wherein the securing means (40) are exclusively arranged in the central area of the reinforcing rail (30) or of the wiper strip (18).

2. A wiper blade according to claim 1, wherein the elongated grooves (21) for the reinforcing rails (30) continually extend along the whole length of the wiper strip (18) from the one transverse face of which up to the other transverse face, and wherein on both sides the end portion (E) of the wiper strip (18) projecting the reinforcing rail (30) is at least approximately of the same length.

3. A wiper blade according to claim 1, wherein the carrier yoke system (13) comprises several clawed yokes (15, 16) gripping the carrier body (20) of the wiper strip (18) by way of their claws (17, 19) at several points distributed along the length, and wherein the securing means (40) are arranged in the area of such a claw (19) which is closest to the centre (M) of the wiper strip.

4. A wiper blade according to claim 2 or 3, wherein a force-fitting connection is provided between the wiper strip and the reinforcing rail by way of the securing means.

5. A wiper blade according to claim 4, wherein the reinforcing rail (30) is of continually the same cross-section, and wherein the width (B2) of the elongated groove (22) is partially reduced by deforming the carrier body (20) of the wiper strip (18) to such an extent that the reinforcing rail (30) in this area between the side walls (28, 29) of the elongated groove (22) is secured against longitudinal movement by press-fit.

6. A wiper blade according to claim 5, wherein the carrier body (20) is deformed by a clamp gripping the wiper strip (18).

7. A wiper blade according to claim 6, wherein a claw (19) of a clawed yoke (15) directly serves as a clamp.

8. A wiper blade according to claim 1, 2 or 3, wherein a form-fitting connection is provided between the wiper strip (18) and the reinforcing rail (30) by the securing means (40).

9. A wiper blade according to claim 8, wherein the reinforcing rail (30) comprises a recess (31) or an aperture (32) in the central area, into which recess (31) or aperture (32) a securing cam (41) formed onto the wiper strip (18) engages, whereby the recess or the aperture (31, 32) and the securing cam (41) engaging into it form the securing means (40).

10. A wiper blade according to claim 9, wherein the recess (31) is open at the edge and the securing cam (41) projects from the bottom (27) of the elongated groove (21).

11. A wiper blade according to claim 9, wherein a securing cam (41) projects from at least one side wall (28, 29) of the elongated groove (21) and engages into the recess or the aperture (31, 32) of the reinforcing rail (30).

12. A wiper blade according to claim 9, wherein this securing cam (41) is pressed out of the side wall (28, 29) of the elongated groove (21) by deforming the end portion (50) of the claw (19).

13. A wiper blade according claim 12, wherein the carrier body (20) of the wiper strip (18) is deformed in one direction (R) perpendiuclarly to the windshield to be cleaned by deforming the end portion (50) of the claw (19) and thus from opposite sides of the side walls (28, 29) of the elongated groove (21) material as securing cams (41) is pressed into the recess or the aperture (31, 32) of the reinforcing rail (30).

14. A wiper blade according to claim 11, 12 or 13, wherein the reinforcing rail (30) comprises a closed aperture (32) into which the securing cams (41) engage.

15. A wiper blade, according to claim 1, wherein a force- and/or form-fitting connection between the carrier yoke system (13) and the wiper strip (18) and/or the reinforcing rail (30) is provided exclusively by deforming the claw (19) which is closest to the centre (M) of the wiper strip (18).

**Revendications**

1. Balai d'essuie-glace pour essuie glace pour véhicule automobile, comprenant un système (13) de palonniers porteurs servant à guider une raclette (18) d'essuie glace qui comporte une lèvre (26) d'essuyage suspendue à un corps porteur (20) par l'intermédiaire d'une nervure (25), le corps porteur présentant sur chaque côté une rainure longitudinale (22) destinée à recevoir une lame raidisseuse (30) qui est immobilisée en translation longitudinale, dans sa région longitudinale (22) respective, en un point, par des moyens d'immobilisation (40) et dont la longueur est plus petite que la longueur de la raclette d'essuie-glace, caractérisé en ce que les moyens d'immobilisation (40) sont agencés exclusivement dans la région centrale de la lame raidisseuse (30) ou de la raclette (18) d'essuie-glace.

2. Balai d'essuie-glace selon la revendication 1, caractérisé en ce que les rainures longitudinales (21) recevant les lames raidisseuses (30) s'étendent sans interruption sur toute la longueur de la raclette (18) d'essuie-glace, d'un côté frontal de cette raclette jusqu'à son autre côté frontal, et en ce que la région d'extrémité (E) de la raclette (8) d'essuie-glace qui dépasse au-delà de la lame raidisseuse (30) est au moins approximativement de même longueur aux deux extrémités.

3. Balai d'essuie-glace selon la revendication 1, caractérisé en ce que le système (13) de palonniers porteurs comporte plusieurs palonniers (15, 16) a griffes, qui encadrent par leurs griffes (17, 19) le corps porteur (20) de la raclette (18) d'essuie glace en plusieurs zones réparties sur la longueur, et en ce que les moyens d'immobilisation (40) sont agencés dans une région d'une telle griffe (19) qui se trouve la plus proche du milieu (M) de la raclette d'essuie-glace.

4. Balai d'essuie-glace selon l'une des revendications 2 ou 3, caractérisé en ce que les moyens d'immobilisation assurent une liaison opérant par action de forces entre la raclette d'essuie-glace et la lame raidisseuse.

5. Balai d'essuie-glace selon la revendication 4, caractérisé en ce que la lame raidisseuse (30) présente une section constante continue sur toute la longueur et en ce que la largeur (B2) de la rainure longitudinale (22) est réduite par endroits par une déformation du corps porteur (20 de la raclette (18) d'essuie-glace, de telle manière que la lame raidisseuse (30) soit immobilisée en translation longitudinale dans cette région, par ajustement serré entre les parois latérales (28, 29) de la rainure longitudinale (22).

6. Balai d'essuie-glace selon la revendication 5, caractérisé en ce que la déformation du corps porteur (20) est constituée par une agrafe qui entoure la raclette (18) d'essuie-glace.

7. Balai d'essuie-glace selon la revendication 6, caractérisé en ce qu'une griffe (19) d'un palonnier (15) à griffes fait directement fonction d'agrafe.

8. Balai d'essuie-glace selon l'une des revendications 1, 2 ou 3, caractérisé en ce que les moyens d'immobilisation (40) assurent une liaison par complémentarité de formes entre la raclette (18) d'essuie-glace et la lame raidisseuse (30).

9. Balai d'essuie-glace selon la revendication 8, caractérisé en ce que la lame raidisseuse (30) présente dans la région centrale un évidement (31) ou une ouverture (32) dans laquelle est engagé un bossage d'immobilisation (41) formé sur la raclette (18) d'essuie-glace, l'évidement ou l'ouverture (31, 32) et le bossage d'immobilisation (41) qui s'y engage constituant les moyens d'immobilisation (40).

10. Balai d'essuie-glace selon la revendication 9, caractérisé en ce que l'évidement (31) est ouvert sur un côté, et en ce que le bossage d'immobilisation (41) fait saillie sur le fond (27) de la rainure longitudinale (21).

11. Balai d'essuie-glace selon la revendication 9, caractérisé en ce que, sur au moins une paroi latérale (28, 29) de la rainure longitudinale (21) fait saillie un bossage d'immobilisation (41) qui s'engage dans l'évidement ou l'ouverture (31, 32) de la lame raidisseuse (30).

12. Balai d'essuie-glace selon la revendication 9, caractérisé en ce que le bossage d'immobilisation (41) est repoussé en dehors de la paroi latérale (28, 29) de la rainure longitudinale (21) par la déformation de la région d'extrémité (50) de la griffe (19).

13. Balai d'essuie-glace selon la revendication 12, caractérisé en ce que, sous l'effet de la déformation de la région d'extrémité (50) de la griffe (19), le corps porteur (20) de la raclette (18) d'essuie-glace est déformé dans une direction (R) perpendiculaire à la glace à essuyer et que, sous cet effet, de la matière est repoussée des côtés opposés des parois latérales (28, 29) de la rainure longitudinale (21) dans l'évidement ou l'ouverture (31, 32) de la lame raidisseuse (30) pour former le bossage d'immobilisation (41).

14. Balai d'essuie-glace selon la revendication 11, 12 ou 13, caractérisé en ce que la lame raidisseuse (30) présente une ouverture (32) fermée de tous côtés, dans laquelle le bossage d'immobilisation (41) est engagé.

15. Balai d'essuie-glace selon la revendication 1, caractérisé en ce qu'une liaison opérant par action de forces et/ou par complémentarité de formes est assurée entre le système (13) de palonniers porteurs et la raclette (18) d'essuie-glace et/ou la lame raidisseuse (30) exclusivement par une déformation de la griffe (19) qui est la plus proche du milieu (M) de la raclette (18) d'essuie-glace.

Fig.1

13
15
14
12
10
M
11

16
17

17

18
21
22
26

V

19

V

E

6

EP 0 408 705 B1

31

Fig.2

30

40

21

31

41

22

Fig.3

30

30

18

26

Fig.4

Fig 5

Fig. 6